**Europäisches Patentamt**

**European Patent Office**

**Office européen des brevets**

(19)

(11) **EP 0 732 134 A1**

## (12) EUROPÄISCHE PATENTANMELDUNG

(43) Veröffentlichungstag:
18.09.1996 Patentblatt 1996/38

(51) Int. Cl.$^6$: **B01D 19/04**, D21H 21/12

(21) Anmeldenummer: 96103719.9

(22) Anmeldetag: 09.03.1996

(84) Benannte Vertragsstaaten:
**AT BE CH DE ES FI FR GB IT LI NL PT SE**

(30) Priorität: 13.03.1995 DE 19508938

(71) Anmelder: **BASF AKTIENGESELLSCHAFT**
**67056 Ludwigshafen (DE)**

(72) Erfinder:
- **Oppenländer, Knut, Dr.**
**67061 Ludwigshafen (DE)**
- **Dralle-Voss, Gabriele, Dr.**
**64297 Darmstadt (DE)**
- **Schuhmacher, Rudolf, Dr.**
**67459 Böhl-Iggelheim (DE)**

(54) **Entschäumer und/oder Entlüfter für wässrige, zur Schaumbildung neigende Medien**

(57) Entschäumer und/oder Entlüfter auf Basis von Öl-in-Wasser-Emulsionen, bei denen die Ölphase zu 5 bis 75 Gew.-% am Aufbau der Emulsion beteiligt ist, für wäßrige, zur Schaumbildung neigende Medien, wobei die Ölphase

a) mindestens einen Alkohol mit mindestens 12 C-Atomen, Destillationsrückstände, die bei der Herstellung von Alkoholen mit einer höheren Kohlenstoffzahl durch Oxosynthese oder nach dem Ziegler-Verfahren erhältlich sind, oder Mischungen der genannten Verbindungen,

b) mindestens einen Ester aus einem Zuckeralkohol mit mindestens 4 OH-Gruppen oder mindestens 2 OH-Gruppen und mindestens einer intramolekularen Etherbindung und einer Fettsäure mit mindestens 20 C-Atomen im Molverhältnis 1 : mindestens 1, wobei die freien OH-Gruppen dieser Ester gegebenenfalls mit $C_{12}$-bis $C_{18}$-Carbonsäuren ganz oder teilweise verestert sind und gegebenenfalls

c) Fettsäureester aus Alkoholen mit mindestens 22 C-Atomen und $C_1$- bis $C_{36}$-Carbonsäuren, Fettsäureester aus $C_{12}$- bis $C_{22}$-Carbonsäuren und ein- bis dreiwertigen $C_1$- bis $C_{20}$-Alkoholen, Polyethylenwachse, natürliche Wachse oder Mischungen der genannten verbindungen, und gegebenenfalls

d) Kohlenwasserstoffe mit einem Siedepunkt oberhalb von 200°C, Fettsäuren mit 12 bis 22 C-Atomen oder Mischungen der genannten Verbindungen

enthält, und Verwendung der Entschäumer und/oder Entlüfter zur Schaumbekämpfung von zur Schaumbildung neigenden wäßrigen Medien, insbesondere zur Schaumbekämpfung bei der Zellstoffkochung, der Zellstoffwäsche, der Mahlung von Papierstoff, bei der Papierherstellung und der Dispergierung von Pigmenten für die Papierherstellung.

EP 0 732 134 A1

## Beschreibung

Die Erfindung betrifft Entschäumer und/oder Entlüfter auf Basis von Öl-in-Wasser-Emulsionen, bei denen die Ölphase zu 5 bis 75 Gew.-% am Aufbau der Emulsion beteiligt ist, für wäßrige, zur Schaumbildung neigende Medien und die Verwendung der Entschäumer und/oder Entlüfter zur Schaumbekämpfung von zur Schaumbildung neigenden wäßrigen Medien, insbesondere zur Schaumbekämpfung bei der Zellstoffkochung, der Zellstoffwäsche, der Mahlung von Papierstoff, der Papierherstellung und der Dispergierung von Pigmenten für die Papierherstellung.

Aus der EP-A-0 142 812 sind Entschäumer auf Basis von Öl-in-Wasser-Emulsionen bekannt, bei denen die Ölphase zu 15 bis 60 Gew.-% am Aufbau der Emulsion beteiligt ist und als wesentliche Komponenten beispielsweise einen $C_{12}$- bis $C_{26}$-Alkohol und/oder einen Fettsäureester von $C_{12}$- bis $C_{22}$-Carbonsäuren mit einem ein- bis dreiwertigen $C_1$- bis $C_{18}$-Alkohol und gegebenenfalls einem Kohlenwasserstoff mit einem Siedepunkt oberhalb von 200°C enthält. Die Öl-in-Wasser-Emulsionen sind durch Zusatz von 0,05 bis 0,5 Gew.-% eines hochmolekularen, wasserlöslichen Homo- oder Copolymerisats von Acrylsäure, Methacrylsäure, Acrylamid oder Methacrylamid gegen Viskositätserhöhung und Aufrahmen bei der Lagerung stabilisiert.

Aus der US-A-4,950,420 sind Entschäumer bekannt, die bei der Herstellung von Papier verwendet werden und die aus einer Mischung eines oberflächenaktiven Polyethers und eines Esters aus einem mehrwertigen Alkohol und einer Fettsäure bestehen. Die Polyetherkomponente leitet sich beispielsweise von polyoxalkyliertem Glycerin, Sorbit oder Sucrose ab. Die Esterkomponente besteht beispielsweise aus einem Mono- oder einem Diester aus Polyethylenglykol und Ölsäure oder Stearinsäure. Die Mischungen können als Esterkomponente auch Ester aus beispielsweise Glycerin oder Sorbit und Ölsäure oder Talgfettsäure enthalten. Sie können gegebenenfalls durch Alkorylierung weitermodifiziert sein.

Der vorliegenden Erfindung liegt die Aufgabe zugrunde, Entschäumer und/oder Entlüfter zur Verfügung zu stellen, die sowohl bei Raumtemperatur als auch bei Temperaturen von beispielsweise 50°C eine hohe Wirksamkeit aufweisen.

Die Aufgabe wird erfindungsgemäß gelöst mit Entschäumern und/oder Entlüftern auf Basis von Öl-in-Wasser-Emulsionen, bei denen die Ölphase zu 5 bis 75 Gew.-% am Aufbau der Emulsion beteiligt ist, für wäßrige, zur Schaumbildung neigende Medien, wenn die Ölphase

a) mindestens einen Alkohol mit mindestens 12 C-Atomen, Destillationsrückstände, die bei der Herstellung von Alkoholen mit einer höheren Kohlenstoffzahl durch Oxosynthese oder nach dem Ziegler-Verfahren erhältlich sind, oder Mischungen der genannten Verbindungen,

b) mindestens einen Ester aus einem Zuckeralkohol mit mindestens 4 OH-Gruppen oder mindestens 2 OH-Gruppen und mindestens einer intramolekularen Etherbindung und einer Fettsäure mit mindestens 20 C-Atomen im Molverhältnis 1 : mindestens 1, wobei die freien OH-Gruppen dieser Ester gegebenenfalls mit $C_{12}$-bis $C_{18}$-Carbonsäuren ganz oder teilweise verestert sind und gegebenenfalls

c) Fettsäureester aus Alkoholen mit mindestens 22 C-Atomen und $C_1$- bis $C_{36}$-Carbonsäuren, Fettsäureester aus $C_{12}$- bis $C_{22}$-Carbonsäuren und ein- bis dreiwertigen $C_1$- bis $C_{20}$-Alkoholen, Polyethylenwachse, natürliche Wachse oder Mischungen der genannten Verbindungen, und gegebenenfalls

d) Kohlenwasserstoffe mit einem Siedepunkt oberhalb von 200°C, Fettsäuren mit 12 bis 22 C-Atomen oder Mischungen der genannten Verbindungen

enthält.

Gegenstand der Erfindung ist außerdem die Verwendung der genannten Entschäumer und/oder Entlüfter zur Schaumbekämpfung von zur Schaumbildung neigenden wäßrigen Medien, insbesondere zur Schaumbekämpfung bei der Zellstoffkochung, Zellstoffwäsche, der Mahlung von Papierstoff, der Papierherstellung und der Dispergierung von Pigmenten für die Papierherstellung.

Als Komponente (a) der Öl-in-Wasser-Emulsionen setzt man vor allem Alkohole mit mindestens 12 C-Atomen oder Mischungen solcher Alkohole ein. Es handelt sich hierbei in den meisten Fällen um einwertige Alkohole, die beispielsweise bis zu 48 C-Atome im Molekül enthalten. Solche Produkte sind im Handel erhältlich. Es können jedoch auch solche Fettalkohole als Komponente (a) eingesetzt werden, die eine wesentlich höhere Anzahl von Kohlenstoffatomen im Molekül enthalten. Bei den Alkoholen der Komponente (a) handelt es sich entweder um natürliche oder um synthetische Alkohole. Beispielsweise eignen sich Laurylalkohol, Myristilalkohol, Cetylalkohol, Palmitylalkohol, Stearylalkohol, Behenylalkohol, Oleylalkohol, Ricinolalkohol, Linoleylalkohol und Erucaalkohol.

Als Komponente (a) kann man in manchen Fällen auch vorteilhafte Mischungen aus (1) Alkoholen mit 12 bis 26 C-Atomen und (2) Alkoholen mit 28 bis 48 C-Atomen einsetzen.

Die als Komponente (a) in Betracht kommenden synthetischen Alkohole, die beispielsweise nach dem Ziegler-Verfahren durch Oxidation von Aluminiumalkylen erhältlich sind, sind gesättigte, geradkettige unverzweigte Alkohole. Synthetische Alkohole werden auch durch Oxosynthese erhalten. Hierbei fallen in aller Regel Alkoholgemische an. Als Komponente (a) der Ölphase der Entschäumeremulsionen können auch Destillationsrückstände verwendet werden, die bei der Herstellung der vorstehend genannten Alkohole durch Oxosynthese oder nach dem Ziegler-Verfahren erhältlich sind. Solche Destillationsrückstände können beispielsweise bis zu 85 Gew.-% an Alkoholen enthalten, der Rest der Destillationsrückstände besteht aus nichtidentifizierten anderen Verbindungen.

Gegebenenfalls kann man auch alkorylierte Destillationsrückstände, die bei dem oben genannten Verfahren zur Herstellung von höheren Alkoholen anfallen, als Komponente (a) einsetzen. Solche Destillationsrückstände werden beispielsweise mit Ethylenoxid oder mit Propylenoxid oder auch mit einer Mischung aus Ethylenoxid und Propylenoxid nach bekannten Verfahren alkoxyliert. Pro OH-Gruppe des Alkohols im Destillationsrückstands werden beispielsweise bis zu 5 Ethylenoxid- bzw. Propylenoxidgruppen angelagert. Vorzugsweise addiert man pro OH-Gruppe des Alkohols im Destillationsrückstand 1 bis 2 Ethylenoxidgruppen.

Die Verbindungen der Komponente (a) können entweder allein oder in Mischung untereinander in beliebigen Verhältnissen als Bestandteil der Komponente (a) die Ölphase der Öl-in-Wasser-Emulsionen bilden. Die Ölphase enthält beispielsweise 99 bis 20, vorzugsweise 40 bis 70 Gew.-% mindestens einer Verbindung der Komponente (a).

Die Entschäumer und/oder Entlüfter auf Basis der Öl-in-Wasser-Emulsionen enthalten in der Ölphase als Komponente (b) mindestens einen Ester aus einem Zuckeralkohol mit mindestens 4 OH-Gruppen oder mindestens 2 OH-Gruppen und mindestens einer intramolekularen Etherbindung und einer Fettsäure mit mindestens 20 C-Atomen im Molverhältnis 1 : mindestens 1, wobei die freien OH-Gruppen dieser Ester gegebenenfalls mit $C_{12}$- bis $C_{18}$-Carbonsäuren ganz oder teilweise verestert sind. Die Komponente (b) enthält vorzugsweise mindestens einen Ester aus Tetriten, Pentiten und/oder Hexiten mit mindestens 22 C-Atome aufweisenden Fettsäuren im Molverhältnis 1 : mindestens 1,9. Besonders bevorzugt werden als Komponente (b) Ester aus Mannit und/oder Sorbit mit Behensäure im Molverhältnis von 1 : mindestens 1, vorzugsweise 1 : mindestens 1,9 eingesetzt. Außer den bevorzugt in Betracht kommenden Zuckeralkoholen Sorbit und Mannit eignen sich Adonit, Arabit, Xylit, Dulcit, Pentaerythrit, Anhydro-Zuckeralkohole wie Sorbid und Sorbitan und Erythrit. Unter Zuckeralkoholen werden beispielsweise die aus Monosacchariden durch Reduktion der Carbonylfunktion entstehenden Polyhydroxy-Verbindungen verstanden, die selbst keine Zucker sind. Es können auch die Anhydro-Verbindungen eingesetzt werden, die aus den Zuckeralkoholen durch intramolekulare Wasserabspaltung entstehen.

Die Ester der Komponente (b) werden dadurch hergestellt, daß man einen Zuckeralkohol oder eine Mischung mehrerer Zuckeralkohole mit einer mindestens 20 C-Atome enthaltenden Fettsäure im Molverhältnis 1 : mindestens 1,5 verestert. Vorzugsweise verestert man die Zuckeralkohole mit solchen Fettsäuren, die 22 bis 30 C-Atome im Molekül aufweisen, z.B. mit Behensäure. Außer Behensäure kommen beispielsweise noch folgende langkettige Fettsäuren in Betracht: Erucasäure, Chysanodonsäure, Lignocerinsäure, Montanwachssäure und Hexacosansäure.

Die Zuckeralkohole werden mit den langkettigen Fettsäuren vorzugsweise im Molverhältnis 1 : mindestens 1,9 umgesetzt. Die Alkoholgruppen der Zuckeralkohole können hierbei teilweise oder vollständig mit den mindestens 20 C-Atome enthaltenden Fettsäuren verestert werden. Man kann jedoch auch solche Ester als Komponente (b) einsetzen, die aus einem Zuckeralkohol mit mindestens 4 OH-Gruppen und einer Fettsäure mit mindestens 20 C-Atomen im Molverhältnis 1 : mindestens 1 bis beispielsweise 3 erhältlich sind und wobei die freien OH-Gruppen dieser Ester mit $C_{12}$- bis $C_{18}$-Carbonsäuren ganz oder teilweise verestert sind. Solche Ester können beispielsweise durch schrittweise Veresterung mit den Fettsäuren einer unterschiedlichen Kohlenstoffzahl oder auch in einer einstufigen Reaktion hergestellt werden. Geeignete $C_{12}$- bis $C_{18}$-Fettsäuren sind beispielsweise Laurinsäure, Myristinsäure, Palmitinsäure, Stearinsäure, Ölsäure und Linolsäure. Auch Mischungen dieser Carbonsäuren können zur Veresterung der Zuckeralkohole eingesetzt werden. Die Veresterungsreaktion erfolgt in der Regel in Gegenwart eines sauren oder basischen Veresterungskatalysators wie Schwefelsäure, p-Toluolsulfonsäure, Zitronensäure, phosphorige Säure, Phosphorsäure, hypophosphorige Säure, Lewissäure wie z.B. Tetraethylorthotitanat, Tetrabutylorthotitanat, Zinndioxid, Zinndibutyldilaurat, Bortrifluorid oder Aluminiumchlorid oder basische Katalysatoren wie Natriummethylat oder Kalium-tert.-butylat. Die Verbindungen der Komponente (b) sind entweder allein oder in Mischung untereinander zu 1 bis 80, vorzugsweise 5 bis 30 Gew.-%, in der Ölphase enthalten. Bei der Veresterungsreaktion mit sauren Katalysatoren können sich aus offenkettigen Zuckeralkoholen durch intramolekulare Etherbildung die entsprechenden Anhydro-Zuckeralkohole bilden. So können bei der Veresterung von Sorbit mit Fettsäuren neben den Sorbitfettsäureestern, Sorbitan- und Sorbidfettsäureester entstehen.

Als Komponente (c) der Ölphase der Entschäumer und/oder Entlüfter verwendet man Fettsäureester aus Alkoholen mit mindestens 22 C-Atomen und $C_1$- bis $C_{36}$-Carbonsäuren, Fettsäureester von $C_{12}$- bis $C_{22}$-Carbonsäuren und 1- bis 3-wertigen $C_1$- bis $C_{20}$-Alkoholen, Polyethylenwachse, natürliche Wachse oder Mischungen der genannten Verbindungen. Die Fettsäuren, die den Estern zugrunde liegen, sind beispielsweise Laurinsäure, Myristinsäure, Palmitinsäure, Stearinsäure, Arachinsäure und Behensäure. Vorzugsweise verwendet man zur Herstellung der Ester Palmitinsäure, Ölsäure oder Stearinsäure. Man kann einwertige $C_1$- bis $C_{18}$-Alkohole zur Veresterung der genannten Carbonsäuren verwenden, z.B. Methanol, Ethanol, Propanol, Butanol, Hexanol, Decanol und Stearylalkohol als auch zweiwertige Alkohole wie Ethylenglykol oder dreiwertige Alkohole wie Glycerin. Die mehrwertigen Alkohole können vollständig oder teilweise verestert sein. Als Komponente (c) eignen sich außerdem natürliche Wachse wie die im Handel erhältlichen Montanesterwachse, Montansäurewachse und Carnaubawachse. Geeignete synthetische Wachse sind beispielsweise Polyethylenwachse mit einer mittleren Molmasse von mindestens 2.000. Falls eine Verbindung der Komponente (c) oder eine Mischung mehrerer Verbindungen der Komponente (c) in den Öl-in-Wasser-Emulsionen enthalten sind, so sind sie in Mengen von beispielsweise 1 bis 50 Gew.-% in der Ölphase enthalten.

Die Ölphase der Emulsionen kann zusätzlich gegebenenfalls noch als Komponente (d) Kohlenwasserstoffe mit einem Siedepunkt oberhalb von 200°C (bei 1.013 mbar), Fettsäuren mit 12 bis 22 C-Atomen oder Mischungen der genannten Verbindungen enthalten. Vorzugsweise eignen sich als Kohlenwasserstoffe Paraffinöle wie die im Handel üblichen Paraffingemische, die auch als Weißöl bezeichnet werden. Die Verbindungen der Komponente (d) werden wahlweise verwendet. Falls sie eingesetzt werden, sind sie zu 1 bis 50 Gew.-% in der Ölphase der Öl-in-Wasser-Emulsionen enthalten.

Um die erfindungsgemäß entschäumend und entlüftend wirkenden Mischungen auf Basis von Öl-in-Wasser-Emulsionen herzustellen, wird die Ölphase in die wäßrige Phase einemulgiert. Hierfür benötigt man meistens Vorrichtungen, in denen die Komponenten der Emulsion einem starken Schergefälle unterworfen werden, z.B. Dispergatoren. Um besonders stabile Öl-in-Wasser-Emulsionen zu erhalten, führt man die Emulgierung der Ölphase in der wäßrigen Phase vorzugsweise in Gegenwart von grenzflächenaktiven Stoffen durch, die einen HLB-Wert von mehr als 6 haben (zur Definition des HLB-Werts vgl. W.C. Griffin, Journal of the Society of Cosmetic Chemists, Band 5, Seiten 249 bis 256 (1954)). Bei den grenzflächenaktiven Stoffen handelt es sich um Öl-in-Wasser-Emulgatoren bzw. um typische Netzmittel. Von den grenzflächenaktiven Stoffen kann man anionische, kationische oder nichtionische Verbindungen verwenden bzw. Mischungen dieser Verbindungen, die miteinander verträglich sind, beispielsweise Mischungen aus anionischen und nichtionischen oder kationischen und nichtionischen Netzmitteln. Stoffe der genannten Art sind beispielsweise Natrium- oder Ammoniumsalze höherer Fettsäuren, Ammoniumoleat oder Ammoniumstearat, oxalkylierte Alkylphenole wie Nonylphenol oder Isooctylphenol, die im Molverhältnis 1:2 bis 1:50 mit Ethylenoxid umgesetzt sind, oxethylierte ungesättigte Öle, z.B. die Reaktionsprodukte aus einem Mol Ricinusöl und 30 bis 40 Mol Ethylenoxid oder die Umsetzungsprodukte aus einem Mol Stearylalkohol mit 60 bis 80 Mol Ethylenoxid. Als Emulgatoren werden vorzugsweise sulfierte Oxethylierungsprodukte von Nonylphenol oder Octylphenol eingesetzt, die als Natrium- oder Ammoniumsalz der entsprechenden Schwefelsäurehalbester vorliegen. 100 Gew.-Teile der Öl-in-Wasser-Emulsionen können gegebenenfalls 0,1 bis 5, vorzugsweise 0,5 bis 2 Gew.-Teile eines Emulgators oder eines Emulgatorgemisches enthalten. Außer den bereits genannten Emulgatoren kann man noch Schutzkolloide wie hochmolekulare Polysaccharide und Seifen oder andere übliche Zusatzstoffe wie Stabilisatoren bei der Herstellung der Öl-in-Wasser-Emulsionen einsetzen. So hat sich beispielsweise ein Zusatz von 0,05 bis 0,5 Gew.-%, bezogen auf die gesamte Emulsion, an hochmolekularen wasserlöslichen Homo- und Copolymerisaten von Acrylsäure, Methacrylsäure, Acrylamid oder Methacrylamid als Stabilisator bewährt. Die Verwendung solcher Stabilisatoren ist beispielsweise Gegenstand der eingangs genannten EP-A-0 149 812.

Durch das Einemulgieren der Ölphase in die wäßrige Phase erhält man Öl-in-Wasser-Emulsionen, die unmittelbar nach der Herstellung einer Viskosität in den Bereich von beispielsweise 300 bis 3.000 mPa.s aufweisen und die eine mittlere Teilchengröße der Ölphase von unterhalb 25 µm vorzugsweise in dem Bereich von 0,5 bis 15 µm haben.

Obwohl die Verbindungen der Komponente (b) allein oder in Mischung mit einem Kohlenwasserstoff praktisch keine Wirksamkeit als Öl-in-Wasser-Emulsionsentschäumer aufweisen, tritt überraschenderweise bei einer Kombination mindestens einer Verbindung der Komponente (b) mit mindestens einer Verbindung der Komponente (a) ein synergistischer Effekt auf. Die erfindungsgemäßen Entschäumer und/oder Entlüfter sind in wäßrigen Systemen, die zum Schäumen neigen, sowohl bei Raumtemperatur als auch bei höheren Temperaturen, z.B. bei Temperaturen oberhalb von 40°C in einem unerwarteten Ausmaß wirksam. Die erfindungsgemäßen Öl-in-Wasser-Emulsionen werden vorzugsweise als Entschäumer und/oder Entlüfter zur Schaumbekämpfung von zur Schaumbildung neigenden wäßrigen Medien beispielsweise in der Nahrungsmittelindustrie, der Stärkeindustrie und in Kläranlagen eingesetzt. Von besonderem Interesse ist die Verwendung der Entschäumer und/oder Entlüfter zur Schaumbekämpfung bei der Zellstoffkochung, Zellstoffwäsche, der Mahlung von Papierstoff, der Papierherstellung und der Dispergierung von Pigmenten für die Papierherstellung. Bei diesen Prozessen liegt die Temperatur des zu entschäumenden wäßrigen Mediums meistens oberhalb von 40°C, z.B. in dem Bereich von 45 bis 75°C. Die erfindungsgemäßen Mischungen auf Basis von Öl-in-Wasser-Emulsionen wirken als Entschäumer und als Entlüfter. Beim Einsatz dieser Mischungen in Papierstoffsuspensionen steht beispielsweise ihre entlüftende Wirkung im Vordergrund. Bezogen auf 100 Gew.-Teile Papierstoff in einem schaumbildenden Medium verwendet man bis zu 0,5, vorzugsweise 0,05 bis 0,3 Gew.-Teile der erfindungsgemäßen Entschäumer und/oder Entlüfter. Die in den Beispielen angegebenen Teile sind Gewichtsteile. Die Prozentangaben beziehen sich auf das Gewicht der Stoffe. Die mittlere Teilchengröße der in Wasser emulgierten Teilchen der Ölphase kann mit Hilfe eines Coulter-Counters bestimmt werden. Der K-Wert von Polymerisaten wurde nach H. Fikentscher, Cellulose-Chemie, Band 13, 58 bis 64 und 71 bis 74 (1932) in wäßriger Lösung bei einer Temperatur von 25°C und einer Konzentration von 0,5 Gew.-% bei pH 7 bestimmt.

Bestimmung des Schaumwertes:

In einer Rinne aus einem durchsichtigen Kunststoff werden jeweils 5 l einer schaumentwickelnden Papierstoffsuspension (0,1 % Holzschliff) 5 Minuten umgepumpt. Die an der Oberfläche der Stoffsuspension gebildete Schaummenge wird dann mit Hilfe eines Rasters an der Wand der Rinne in Flächeneinheiten ($cm^2$) gemessen und als sogenannter Schaumwert zur Beurteilung der Wirksamkeit eines Entschäumers angegeben.

Pumpt man die Papierstoffsuspension in Abwesenheit eines Entschäumers 5 Minuten um, so erhält man einen Schaumwert von 1.200 bis 1.250 $cm^2$. Durch die Zugabe von jeweils 2 mg/l eines wirksamen Entschäumers (insgesamt 10 mg fest) zu der Papierstoffsuspension wird dieser Wert deutlich erniedrigt, so daß er ein Maß für die Wirksamkeit eines Entschäumers darstellt.

Prüfung der Entschäumer:

Die Temperatur der Papierstoffsuspension beträgt in den Beispielen 40 oder 50°C, wobei die Temperatur während der 5-minütigen Prüfung auf ± 1°C konstant gehalten wird.

Da der Schaumnullwert bei 40 und bei 50°C unterschiedlich ist, wird die Wirksamkeit eines Entschäumers als Prozent-Restschaum dargestellt. Der Prozent-Restschaum (R) wird berechnet als

$$R = \frac{S_e \cdot 100}{S_o} ,$$

wobei $S_e$ der Schaumwert bedeutet, der nach Zugabe eines Entschäumers und $S_o$ der Schaumnullwert ist, d.h. der Wert, der in Abwesenheit eines Entschäumers gemessen wird. In dieser Terminologie ist der Entschäumer um so besser je kleiner R ist.

Beispiele

Herstellung von Zuckeralkoholestern

Zuckeralkoholester 1

In einem Kolben, der mit einem Rührer und einer Destillationsbrücke versehen ist, werden 509 g Behensäure und 137 g Sorbit vorgelegt und mit 1 Gew.-%, bezogen auf die Mischung, hypophosphoriger Säure als Katalysator versetzt. Man erhitzt das Reaktionsgemisch und destilliert unter Rühren bei einem Druck von ca. 20 mbar das bei der Veresterung entstehende Wasser ab. Um den Verlauf der Reaktion zu kontrollieren, werden dem Reaktionsgemisch Proben entnommen. Man bestimmt die Säurezahl und kontrolliert den Reaktionsverlauf IR-spektroskopisch. Sobald die Säurezahl unterhalb von 10 mg KOH/g beträgt, wird die Reaktion abgebrochen und die Reaktionsmischung abgekühlt. Die Reaktionszeit betrug 12 Stunden. Man erhielt Sorbitandibehenat mit einer Säurezahl von 5,6.

Zuckeralkoholester 2

Man verfährt wie bei der Herstellung von Zuckeralkoholester 1 beschrieben, setzt jedoch anstelle von Sorbit 137 g Mannit ein. Nach einer Reaktionszeit von 11 Stunden ist die Veresterung praktisch beendet. Man erhält Mannitdibehenat mit einer Säurezahl von 6,3.

Beispiel 1

Man stellt zunächst eine Ölphase her, indem man

a) 60 Teile eines $C_{16}$- bis $C_{20}$-Alkoholgemisches,
b) 6 Teile Zuckeralkoholester 1 und
c) 34 Teile des Glycerintriesters von $C_{16}/C_{18}$-Fettsäuren miteinander mischte und dabei auf eine Temperatur von 110°C er

hitzt.

Getrennt davon wird eine wäßrige Phase hergestellt, die aus 65 Teilen Wasser, 3 Teilen eines Emulgators, der erhältlich ist durch Anlagerung von 25 mol Ethylenoxid an 1 mol Isooctylphenol und Verestern des Anlagerungsproduktes mit Schwefelsäure zum Halbester und 1 Teil eines Copolymerisats aus 70 % Acrylamid und 30 % Acrylsäure vom K-Wert 270 besteht. Die so erhaltene wäßrige Lösung wird auf eine Temperatur von 80°C erhitzt. Mit Hilfe eines Dispergators wird dann eine Öl-in-Wasser-Emulsion hergestellt, indem man die oben beschriebene Ölphase in die auf 80°C erwärmte wäßrige Phase unter Dispergieren zufügt. Die beiden verschiedenen Phasen werden in einem solchen Verhältnis eingesetzt, daß die Ölphase zu 30 Gew.-% am Aufbau der Emulsion beteiligt ist und eine mittlere Teilchengröße von 3 bis 10 μm hat. Die Öl-in-Wasser-Emulsion hat unmittelbar nach der Herstellung bei einer Temperatur von 20°C eine Viskosität von 340 mPa.s.

Beispiel 2

Man bereitet zunächst eine Ölphase, indem man

a) 60 Teile eines $C_{16}$- bis $C_{20}$-Fettalkoholgemisches,
b) 6 Teile Zuckeralkoholester 2,
c) 17 Teile Glycerintriester von $C_{16}/C_{18}$-Fettsäuren und

d) 17 Teile eines Mineralöls (handelsübliches Weißöl)

unter Durchmischen auf eine Temperatur von 110°C erhitzt und unter den in Beispiel 1 angegebenen Bedingungen in die im Beispiel 1 beschriebene wäßrige Phase mit Hilfe eines Dispergators einemulgiert. Die so erhältliche Öl-in-Wasser-Emulsion hat unmittelbar nach der Herstellung bei einer Temperatur von 20°C eine Viskosität von 555 mPa.s. Der Anteil der Ölphase in der Emulsion beträgt wie im Beispiel 1 30 %.

Beispiel 3

Beispiel 2 wird mit der einzigen Ausnahme wiederholt, daß man als Komponente (b) den Zuckeralkoholester 1 verwendet. Die so erhältliche Öl-in-Wasser-Emulsion hat unmittelbar nach der Herstellung bei einer Temperatur von 20°C eine Viskosität von 330 mPa.s.

Beispiel 4

Man stellt zunächst eine Ölphase her, indem man

a) 90 Teile eines $C_{16}$- bis $C_{20}$-Alkoholgemisches und
b) 10 Teile Zuckeralkoholester 1 unter Mischen auf eine Temperatur von 110°C erhitzt und dann die Mischung unter den in Beispiel 1 angegebenen Bedingungen in die dort ebenfalls beschriebene wäßrige Phase einemulgiert. Der Anteil der Ölphase in der Emulsion beträgt 20 %. Die so erhältliche Öl-in-Wasser-Emulsion hat unmittelbar nach der Herstellung bei einer Temperatur von 20°C eine Viskosität von 315 mPa.s.

Vergleichsbeispiel 1

Man stellt zunächst eine Ölphase her, indem man

(1) 34 Teile Glycerintriester von $C_{16}/C_{18}$-Fettsäuren und
(2) 66 Teile des Zuckeralkoholesters 1 unter Mischen auf eine Temperatur von 110°C erhitzt und danach mit Hilfe eines Dispergators in die im Beispiel 1 beschriebene Wasserphase mit Hilfe eines Dispergators unter den dort angegebenen Bedingungen emulgiert. Man erhält eine Öl-in-Wasser-Emulsion, die unmittelbar nach der Herstellung bei einer Temperatur von 20°C eine Viskosität von 400 mPa.s hat. Die Ölphase ist zu 30 % am Aufbau der Emulsion beteiligt und hat eine mittlere Teilchengröße von 3 bis 10 μm.

Vergleichsbeispiel 2

Das Vergleichsbeispiel 1 wird mit der einzigen Ausnahme wiederholt, daß man als Komponente (2) der Ölphase den Zuckeralkoholester 2 einsetzt. Die so erhältliche Öl-in-Wasser-Emulsion hat unmittelbar nach der Herstellung bei einer Temperatur von 20°C eine Viskosität von 350 mPa.s.

Vergleichsbeispiel 3

Man stellt zunächst eine Ölphase her, indem man

(1) 90 Teile Glycerintriester von $C_{16}/C_{18}$-Fettsäuren und
(2) 10 Teile des Zuckeralkoholesters 1 unter Mischen auf eine Temperatur von 110°C erhitzt und anschließend unter den in Beispiel 1 angegebenen Bedingungen so in die dort ebenfalls angegebene Wasserphase emulgiert, daß man eine Öl-in-Wasser-Emulsion mit einem Anteil Ölphase von 20 % erhält. Die Emulsion hat unmittelbar nach der Herstellung bei einer Temperatur von 20°C eine Viskosität von 220 mPa.s.

Vergleichsbeispiel 4

Man stellt zunächst eine Ölphase her, indem man

(1) 66 Teile eines $C_{16}$- bis $C_{20}$-Alkoholgemisches und
(2) 34 Teile Glycerintriester von $C_{16}/C_{18}$-Fettsäuren unter Erhitzen auf eine Temperatur von 110°C mischt und die Ölphase dann in die in Beispiel 1 beschriebene wäßrige Phase so einemulgiert, daß eine Öl-in-Wasser-Emulsion mit einem 30 %igen Anteil an Ölphase resultiert. Die so erhältliche Öl-in-Wasser-Emulsion hat unmittelbar nach der Herstellung bei einer Temperatur von 20°C eine Viskosität von 340 mPa.s.

Die in den Beispielen und Vergleichsbeispielen beschriebenen Öl-in-Wasser-Emulsionen werden bezüglich ihrer entschäumenden Wirkung auf die oben beschriebene schaumentwickelnde Papierstoff-Suspension bei Temperaturen von 40 bzw. 50°C geprüft. Die dabei erhaltenen Ergebnisse sind in der folgenden Tabelle angegeben.

Tabelle

| Beispiel | Restschaum [%] bestimmt bei | |
|---|---|---|
| | 50°C | 40°C |
| 1 | 9 | 9 |
| 2 | 7 | 7 |
| 3 | 8 | 7 |
| 4 | 7 | 11 |
| Vergleichsbeispiel | | |
| 1 | 46 | 40 |
| 2 | 31 | 33 |
| 3 | 48 | 41 |
| 4 | 29 | 13 |

## Patentansprüche

1. Entschäumer und/oder Entlüfter auf Basis von Öl-in-Wasser-Emulsionen, bei denen die Ölphase zu 5 bis 75 Gew.-% am Aufbau der Emulsion beteiligt ist, für wäßrige, zur Schaumbildung neigende Medien, dadurch gekennzeichnet, daß die Ölphase

   a) mindestens einen Alkohol mit mindestens 12 C-Atomen, Destillationsrückstände, die bei der Herstellung von Alkoholen mit einer höheren Kohlenstoffzahl durch Oxosynthese oder nach dem Ziegler-Verfahren erhältlich sind, oder Mischungen der genannten Verbindungen,

   b) mindestens einen Ester aus einem Zuckeralkohol mit mindestens 4 OH-Gruppen oder mindestens 2 OH-Gruppen und mindestens einer intramolekularen Etherbindung und einer Fettsäure mit mindestens 20 C-Atomen im Molverhältnis 1 : mindestens 1, wobei die freien OH-Gruppen dieser Ester gegebenenfalls mit $C_{12}$- bis $C_{18}$-Carbonsäuren ganz oder teilweise verestert sind und gegebenenfalls

   c) Fettsäureester aus Alkoholen mit mindestens 22 C-Atomen und $C_1$- bis $C_{36}$-Carbonsäuren, Fettsäureester aus $C_{12}$- bis $C_{22}$-Carbonsäuren und ein- bis dreiwertigen $C_1$- bis $C_{20}$-Alkoholen, Polyethylenwachse, natürliche Wachse oder Mischungen der genannten Verbindungen, und gegebenenfalls

   d) Kohlenwasserstoffe mit einem Siedepunkt oberhalb von 200°C, Fettsäuren mit 12 bis 22 C-Atomen oder Mischungen der genannten Verbindungen

enthält.

2. Entschäumer und/oder Entlüfter nach Anspruch 1, dadurch gekennzeichnet, daß die Komponente (b) mindestens ein Ester aus Tetriten, Pentiten und/oder Hexiten mit mindestens 22 C-Atome aufweisenden Fettsäuren im Molverhältnis 1 : mindestens 1,9 ist.

3. Entschäumer und/oder Entlüfter nach Anspruch 1 oder 2, dadurch gekennzeichnet, daß die Komponente (b) mindestens ein Ester aus Mannit und/oder Sorbit mit Behensäure im Molverhältnis 1 : mindestens 1 ist.

4. Entschäumer und/oder Entlüfter nach einem der Ansprüche 1 bis 3, dadurch gekennzeichnet, daß die Ölphase 1 bis 80 Gew.-% mindestens einer Verbindung der Komponente (b) enthält.

5. Entschäumer und/oder Entlüfter nach einem der Ansprüche 1 bis 4, dadurch gekennzeichnet, daß die Ölphase 99 bis 20 Gew.-% mindestens einer Verbindung der Komponente (a) enthält.

6. Verwendung der Entschäumer und/oder Entlüfter nach Anspruch 1 zur Schaumbekämpfung von zur Schaumbildung neigenden wäßrigen Medien.

7. Verwendung der Entschäumer und/oder Entlüfter nach Anspruch 1 zur Schaumbekämpfung bei der Zellstoffkochung, Zellstoffwäsche, der Mahlung von Papierstoff, der Papierherstellung und der Dispergierung von Pigmenten für die Papierherstellung.

8. Verwendung der Entschäumer und/oder Entlüfter nach Anspruch 1 als Entlüfter in Papierstoffsuspensionen in Mengen bis zu 0,5 Gew.-Teilen pro 100 Gew.-Teile der trockenen Papierstoffe.

Europäisches
Patentamt

## EUROPÄISCHER RECHERCHENBERICHT

Nummer der Anmeldung

EP 96 10 3719

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US-A-4 127 719 (BASF AG) <br> * Seite 4, Zeile 27 - Zeile 29; Ansprüche 1-3 * | 1,4-8 | B01D19/04 <br> D21H21/12 |
| A | DE-A-34 23 994 (W.R. GRACE) <br> * Ansprüche 1,2,4,8,9 * | 1,2,4-8 | |
| A | US-A-4 631 145 (C.ZYCHAL) <br> * Ansprüche 1,3 * | | |
| A | DE-A-30 01 387 (CHEMISCHE FABRIK STOCKHAUSEN) <br> * Seite 6, Zeile 25 - Seite 7, Zeile 3 * <br> * Seite 7, Zeile 18 - Zeile 25; Ansprüche 1,16 * | 1,2,4-8 | |
| A | EP-A-0 322 830 (BASF AKTIENGESELLSCHAFT) <br> * Ansprüche 1,3 * | 1,4-8 | |

RECHERCHIERTE SACHGEBIETE (Int.Cl.6)

B01D
D21H

Der vorliegende Recherchenbericht wurde für alle Patentansprüche erstellt

| Recherchenort | Abschlußdatum der Recherche | Prüfer |
|---|---|---|
| DEN HAAG | 21.Juni 1996 | Hilgenga, K |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P04C03)